# EUROPÄISCHE PATENTSCHRIFT

(11) **EP 1 981 674 B1**
(45) Veröffentlichungstag und Bekanntmachung des Hinweises auf die Patenterteilung: **18.11.2009**
(21) Anmeldenummer: 07712188.7
(22) Anmeldetag: 08.02.2007
(51) Int. Cl.: B23F 9/10, B23F 23/10, B23F 23/12, B24B 49/03

(54) **VERFAHREN ZUM BEARBEITEN VON KEGELRÄDERN IM TEILENDEN VERFAHREN MIT KOMPLETTER TEILUNGSFEHLERKOMPENSATION**
METHOD FOR MACHINING BEVEL GEARS IN A PITCHING METHOD WITH COMPLETE PITCH ERROR COMPENSATION
PROCEDE D'USINAGE DE ROUES CONIQUES DANS UN PROCEDE DE DIVISION AVEC COMPENSATION COMPLETE DES ERREURS DE DIVISION

(30) Priorität: 10.02.2006 EP 06002768
(43) Veröffentlichungstag der Anmeldung: 22.10.2008
(73) Patentinhaber: Klingelnberg GmbH, 42499 Hückeswagen (DE)
(72) Erfinder: RIBBECK, Karl Martin, 42897 Remscheid (DE); KÖNIG, Torsten, 09394 Hohndorf (DE)
(74) Vertreter: OK pat AG
(86) Internationale Anmeldenummer: PCT/EP2007/051228
(87) Internationale Veröffentlichungsnummer: WO 2007/090871

(56) Entgegenhaltungen:
- DE-A1- 2 833 923
- DE-A1- 3 901 621
- US-A- 3 212 403

## Beschreibung

Die Erfindung betrifft Verfahren zur teilenden Bearbeitung von Zahnrädern, wobei der fertigungsbedingte Teilungsfehler kompensiert wird.

### Stand der Technik

Man unterscheidet im Wesentlichen zwischen Maschinen, die im teilenden Verfahren arbeiten und Maschinen, die kontinuierlich arbeiten. Beim teilenden Verfahren wird eine Zahnlücke bearbeitet, dann erfolgt eine relative Verschiebungsbewegung zum Herausfahren des Werkzeugs aus einer Zahnlücke und eine sogenannte Teilungsbewegung (Teilungsdrehung), bei der sich das Zahnrad relativ zum Werkzeug dreht bevor dann die nächste Zahnlücke bearbeitet wird. Es wird somit Schritt für Schritt ein Zahnrad gefertigt. Typischerweise ist eine Verzahnungsmaschine, die im teilenden Verfahren arbeitet, mit einem Teilapparat versehen, der das Werkstück um eine oder mehrere Teilungen um die Werkstückachse verdreht bevor das Werkzeug erneut eingreift.

Bei moderneren Maschinen wird eine CNC Steuerung eingesetzt, die so ausgelegt ist, dass die Teilungsbewegung im geeigneten Moment aufgeführt werden kann.

Das kontinuierliche Verfahren, teilweise auch als kontinuierliches Teilungsverfahren bezeichnet, basiert auf komplexeren Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten Antreiben mehrere Achsantriebe.

Aus dem US-Patent US 3,212,403 sind ein Verfahren und eine Maschine bekannt, die kontinuierlich arbeiten. Dieses kontinuierliche Verfahren basiert auf komplexen Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten Antreiben mehrere Achsantriebe.

Aus der Offenlegungsschrift DE 3901621 A1 ist ein Ansatz zur Teilungsfehlerkompensation beim Erzeugen von Schneckenrädern auf einer Drehbank bekannt.

Das teilenden Verfahren hat den Nachteil, dass es zu sogenannten Teilungsfehlern kommt. Diese sind dadurch bedingt, dass sich während der Verzahnungsbearbeitung mittels Fräsen eines Werkstücks die Temperatur des Werkstücks ändern. Mit zunehmender Temperatur ergeben sich daher Abweichungen vom Vorgegebenen. Auch beim Schleifen treten Teilungsfehler auf, wobei die Fehler nicht durch Erwärmung (es wird mit Schleiföl gearbeitet) sondern durch Werkzeugverschleiß bei der Bearbeitung der einzelnen Lücken auftritt. Die Schleifscheibe wird vor jedem neuen Werkstück üblicherweise wieder abgerichtet, so daß ein ähnlicher Verschleiß für jedes Werkstück über die einzelnen Lücken auftritt.

Bisher werden solche Teilungsfehler ausgeglichen, indem die Teilungsfehlersumme ermittelt und dann in eine Kompensation umgesetzt wird. Dabei wird typischerweise die Teilungsfehlersumme durch die Zähnezahl geteilt, was zu einer sogenannten linearen Kompensation führt. Diese Art der Kompensation ist aber nicht zufriedenstellend, da bei einer linearen Kompensation alle Zähne verändert werden, was dazu führen kann, dass auch Zähne verändert werden, die eigentlich am richtigen Ort saßen.

Von daher liegt der Erfindung die Aufgabe zugrunde, einen Ansatz bereit zu stellen, der es ermöglicht das teilende Verfahren in der Serienfertigung von Kegelrädern genauer zu machen und zu automatisieren.

Die Aufgabe wird erfindungsgemäss durch ein Verfahren gemäss Patentanspruch 1 gelöst.

Erfindungsgemäss wurde diese Aufgabe dadurch gelöst, dass zum Bearbeiten eines Kegelrades eine spezielle 6-achsige Vorrichtung eingesetzt wird, die eine Werkstückspindel zur Aufnahme des Kegelrades, eine Werkzeugspindel zur Aufnahme eines Werkzeugs und Antriebe zum Bearbeiten des Kegelrades mit dem Werkzeug umfasst. Die Vorrichtung führt die folgenden Schritte eines Completing-Verfahren aus, bei dem jeweils beide Zahnflanken einer Zahnlücke gleichzeitig gefertigt werden:
- Vorgeben von Master- oder Neutraldaten, welche die Form eines in Serie zu fertigenden Kegelrads und die hierzu erforderliche Maschinenkinematik beschreiben,
- Ausführen von folgenden Bearbeitungsschritten im Einzelteil-Completing-Verfahren anhand der Master- oder Neutraldaten,
   a) Bearbeiten einer Zahnlücke eines Probe-Werkstücks mit dem Werkzeug durch Ausführen einer Bearbeitungsbewegung,
   b) Ausführen einer Relativbewegung zwischen dem Werkzeug und Probe-Werkstück, um das Werkzeug aus der Zahnlücke zu entfernen,
   c) Ausführen einer Teilungsdrehung, um das Probe-Werkstück in eine andere Winkelposition zu überführen,
   d) Bearbeiten einer weiteren Zahnlücke des Probe-Werkstücks mit dem Werkzeug durch erneutes Ausführen der Schritte a) - c), wobei diese Schritte wiederholt werden bis alle Zahnlücken des Probe-Werkstücks gefertigt sind,
- Ermitteln des Teilungsfehlers (zum Beispiel in einem Verzahnungsmesszentrum) aller Zähne des Probe-Werkstücks,
- Ermitteln einer geeigneten Teilungsfehler-Kompensation pro Zahn,
- Übermitteln oder Zurverfügungstellen von Korrekturwerten (Offset für den Teilungswinkel und/oder die Eintauchtiefe des Werkzeugs),
- Anpassen der Maschinendaten der 6-achsigen Vorrichtung anhand der Korrekturwerte als Vorbereitung auf die Serienfertigung einer Reihe von teilungsfehler-kompensierten Kegelrädern,
- Produktion der teilungsfehler-kompensierten Kegelräder unter Verwendung der angepassten Maschinendaten durch Ausführen der Schritte a) - d), wobei diese Schritte wiederholt werden bis alle Zahnlücken eines teilungsfehler-kompensierten Kegelrads gefertigt sind.

Erfindungsgemäss werden durch die Ermittlung der Teilungsfehler-Kompensation die Steuerungsdaten oder Maschinendaten so geändert, dass mehrere der Bearbeitungsbewegungen und der Teilungsdrehungen gegenüber den ursprünglichen Vorgaben, die beim Fertigen des durch die Master- oder Neutraldaten definierten Probe-Werkstücks eingesetzt wurden, verändert werden.

Mit anderen Worten ausgedrückt wird der Teilungsfehler über mindestens zwei der sechs Achsen oder sogar über alle Achsen kompensiert. Dabei wird mindestens das Verdrehen, durch Anpassung der Teilungsdrehungen, und die Tiefe der Zahnlücken, durch Anpassung der Bearbeitungsbewegungen, geändert und zwar Zahn für Zahn. Es handelt sich bei der Anpassung nicht um eine lineare Anpassung, sondern es erfolgt gemäss Erfindung eine individuelle Anpassung pro Zahn, respektive pro Zahnlücke.

Das heisst, dass gemäss Erfindung jeder Zahn, respektive jede Zahnlücke, der in der Serienfertigung zu fertigenden Kegelräder an sich einzeln korrigiert wird, so dass jeder Zahn, respektive jede Zahnlücke, an der "richtigen" Stelle sitzt. Dabei wird Bezug genommen auf einen der z Zähne des Kegelrads. Dieser eine Zahn dient quasi als Bezugszahn für die Kompensation der Teilungsfehler.

Insbesondere geht es gemäss Erfindung um das Trockenfräsen von Kegelrädern im Einzelteil-Completing-Verfahren. Die Erfindung ist besonders für das Trockenfräsen geeignet, da beim Trockenfräsen die Teilungsfehler deutlicher sind. Dies liegt unter anderem daran, dass das Werkstück während der Fräsbearbeitung die Temperatur stärker erhöht als im Fall des Nassfräsens und die Maschine dadurch tiefer schneidet als "gewollt". Wenn das Material wärmer wird, dann wird typischerweise auch die Zahnlücke grösser. Je nach Fertigungsverfahren bewegt sich die Temperatur des Werkstücks von Raumtemperatur am Anfang zu Temperaturen zwischen ca. 40 und 50 Grad gegen Ende der Bearbeitung.

Das Verfahren ist ebenfalls zur Teilungsfehlerkompensation beim Schleifen von Zahnrädern geeignet. Beim Schleifen wird vor der Bearbeitung des Bauteils die Schleifscheibe abgerichtet. Während der Schleifbearbeitung nutzt sich die Schleifscheibe in ihrer Höhe und Breite ab, so daß die Zahnlücken immer weniger tief und schmaler werden. Vor der Bearbeitung des nächsten Bauteils wird die Schleifscheibe neu abgerichtet. Auch in diesem Fall kann das Kompensationsverfahren angewendet werden.

Nach dem Ermitteln des Teilungsfehler an dem Probewerkstück wird rechnerisch ermittelt, wie man den Teilungswinkel τ (Teilungsdrehung) und/oder die Eintauchtiefe (Bearbeitungsbewegung) ändern muss, damit das Tieferscheiden, bzw. das zu wenig tief Schneiden in der Serienfertigung wie beschrieben kompensiert werden kann.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben. Es zeigen:
- **FIG. 1**: eine Ansicht einer Kegelradfräsmaschine mit sechs Achsen;
- **FIG. 2**: ein schematisches Blockdiagramm;
- **FIG. 3**: eine schematische Darstellung eines Abschnitts eines Kegelradritzels im Stirnschnitt und die erfindungsgemässe Ermittlung der Teilungsfehler;
- **FIG. 4A**: eine schematische Darstellung des akkumulierten Zahn-zu-Zahn Teilungsfehlers an den linken (konvexen) Zahnflanken;
- **FIG. 4B**: eine schematische Darstellung des akkumulierten Zahn-zu-Zahn Teilungsfehlers an den rechten (konkaven) Zahnflanken;
- **FIG. 4C**: eine schematische Darstellung des akkumulierten Teilungsfehlers der Zahnlücken;
- **FIG. 5A**: eine schematische Darstellung des akkumulierten Zahn-zu-Zahn Teilungsfehlers an den linken (konvexen) Zahnflanken nach der erfindungsgemässen Kompensation;
- **FIG. 5B**: eine schematische Darstellung des akkumulierten Zahn-zu-Zahn Teilungsfehlers an den rechten (konkaven) Zahnflanken nach der erfindungsgemässen Kompensation;
- **FIG. 5C**: eine schematische Darstellung des akkumulierten Teilungsfehlers der Zahnlücken nach der erfindungsgemässen Kompensation;
- **FIG. 6A-6C**: weitere Details der erfindungsgemässen Kompensation.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen sollen. Der erfinderische Gedanke und der Schutzumfang der Schutzansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

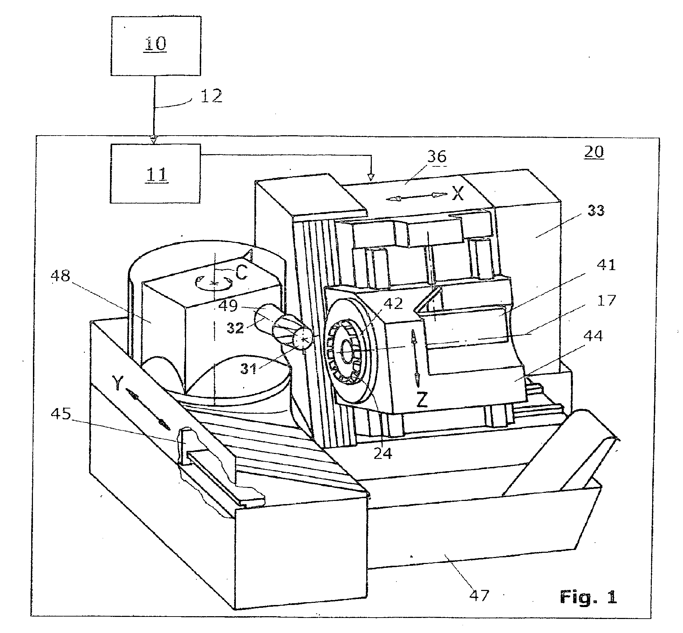

Eine erste Vorrichtung 20 gemäss Erfindung ist in der Fig. 1 gezeigt. Diese erfindungsgemäße Maschine 20 kann zum Beispiel ganz oder teilweise der in der bereits Anmeldung DE 196 46 189 C2 beschriebenen CNC-Maschine zum Herstellen von bogenverzahnten Kegelrädern entsprechen. Sie besitzt einen Antriebsmotor 41 zum Drehen des Stirnmesserkopfs 24 um seine Rotationsachse 17. Motor 41 und Stirnmesserkopf 24 befinden sich auf einem ersten Schlitten 44, der seitlich an einem Maschinengehäuse 36 geführt wird und in der Höhe (parallel zur Z-Achse) verfahrbar ist. Das Maschinengehäuse 36 ist seinerseits horizontal auf einem Maschinenbett 47 verfahrbar (parallel zur X-Achse), auf dem sich außerdem ein zweiter Schlitten 45 befindet. Dieser zweite Schlitten 45 trägt einen um eine vertikale Achse C drehbaren Werkstückträger 48 mit einer Werkstückspindel 49 und einem Werkstück 31, die im Werkstückträger 48 um eine horizontale Achse 32 drehbar gelagert sind. Der zweite Schlitten 45 ist ebenfalls horizontal verfahrbar (parallel zur Y-Achse), jedoch rechtwinklig zur X-Achse des Maschinengehäuses 36 und zur Z-Achse des ersten Schlittens 44. Damit bilden diese Maschinenkomponenten die mechanischen Voraussetzungen, Kegelräder durch einen Wälzprozeß im Einzelteilverfahren mit efindungsgemässer Teilungskompensation herzustellen. Der entscheidende Unterschied dieser erfindungsgemäßen Maschine zu einer herkömmlichen Maschine besteht in einem geänderten Steuerungsmittel der CNC-Steuerung, die in dem Schaltschrank 33 untergebracht ist. Gemäss Erfindung umfasst das Steuerungsmittel eine Steuerung, die nach dem Fertigen mindestens eines Probewerkstücks neue Steuerungsdaten lädt, die dann zur Serienfertigung von teilungsfehler-kompensierten Kegelrädern eingesetzt werden.

Es wird gemäss Erfindung nach einer Zustellbewegung eine Zahnlücke eines Kegelrades bearbeitet. Dieser Vorgang wird Bearbeitungsvorgang und die entsprechende Bewegung Bearbeitungsbewegung genannt. Dann erfolgt eine Relativbewegung zwischen Werkzeug und Werkstück, um das Werkzeug aus der Zahnlücke zu entfernen. Es kann sich der Relativbewegung um eine Kippbewegung oder eine kombinierte Bewegung, die sich aus einer translatorischen Bewegung und einer Kippbewegung zusammensetzt, handeln.

Durch die Relativbewegung wird das Werkzeug aus der Zahnlücke entfernt ohne mit den soeben gefertigten Flanken benachbarter Zähne zu kollidieren. Nun wird gemäss Erfindung eine Teilungsdrehung um die Drehachse des Werkstücks ausgeführt und das Werkzeug erneut zugestellt. Diese Teilungsdrehung ist gegenüber der entsprechenden Teilungsdrehung die am Probe-Werkstück ausgeführt wurde leicht verändert, um den Teilungsfehler zu kompensieren.

Bei der Maschine 20, die mit einer CNC-Steuerung ausgestattet ist, erfolgt die Teilungsfehlerkompensation "elektronisch", d.h. durch geeignete Anpassung der einzelnen Bewegungsabläufe.

Eine erfindungsgemässe Steuerung kann so programmiert werden, dass die geänderten Steuerungsdaten vor dem Beginn der eigentlichen Serienfertigung geladen werden, um dann die Maschinendaten, d.h. die Daten, welche die Bewegung der einzelnen Achsen festlegen, anzupassen.

Besonders bevorzugt ist eine Ausführungsform bei der die CNC-Steuerung ein spezielles Softwaremodul (zum Beispiel Softwaremodul 11 in Fig. 1) umfasst, das es ermöglicht geänderte Steuerungsdaten von einer Messmaschine 10 zu übernehmen, wie in Fig. 1 anhand eines Pfeils 12 schematisch angedeutet.

In Fig. 1 ist das entsprechende Blockdiagramm einer Vorrichtung 20 gemäss Erfindung gezeigt. Die Vorrichtung 20 weist sechs Antriebe X, Y, Z, B, C und A1 auf, die in Fig. 1 als Funktionsblöcke gezeigt sind. Jeder dieser Antriebe wird von eine CNC-Steuerung 40 her angesteuert. Im gezeigten Beispiel sind die Verbindungen zwischen der CNC-Steuerung 40 und den Antrieben durch Doppelpfeile dargestellt, was andeuten soll, dass die Antriebe Rückmeldungen an die Steuerung 40 geben können. Die Drehantriebe B, C, A1 können zum Beispiel Rückmeldung über das Drehmoment liefern, oder es können Winkelcoder eingesetzt werden, um die Winkelposition an die Steuerung 40 zu übermitteln. Die Antriebe X, Y, Z können zum Beispiel über Weg- oder Positionsgeber Information an die Steuerung zurück übermitteln. Die Steuerung 40 steht im gezeigten Ausführungsbeispiel mit einem Softwaremodul 42 in Verbindung. Dieses Softwaremodul 42 kann zum Beispiel den Zugriff auf einen Datenspeicher 51 ermöglichen und die von der Steuerung 40 umsetzbaren Datenformate bereit stellen.

Gemäss Erfindung kann zum Beispiel das Softwaremodul 42 so ausgelegt sein, dass es die Fertigung eines oder mehrere Probewerkstücke anhand von vorgegebenen Steuerungsdaten 45 ermöglicht. Diese Steuerungsdaten 45 können zum Beispiel über eine Verbindung 46 von einem Computer oder anderen System aus vorgegeben werden. Die Steuerungsdaten 45 werden in einem Speicher 51 abgelegt und können direkt zur Steuerung der Vorrichtung 20 eingesetzt werden, wenn die Vorrichtung 20 dazu ausgelegt ist diese Steuerungsdaten 45 direkt umzusetzen. Zu diesem Zweck werden sie über eine als 47 angedeutete Verbindung aus dem Speicher 51 abgerufen. Es ist aber je nach Ausführungsform auch denkbar, dass anstatt von Steuerungsdaten Daten in einer anderen Form in den Speicher 51 übergeben werden. Es kann dann zum Beispiel das Softwaremodul 42 so eingesetzt werden, dass es diese Daten über eine Verbindung 44 übernimmt und vor dem Ausführen der Fertigungsbewegungen umsetzt in Steuerungsinformation oder Steuerungsdaten 48.

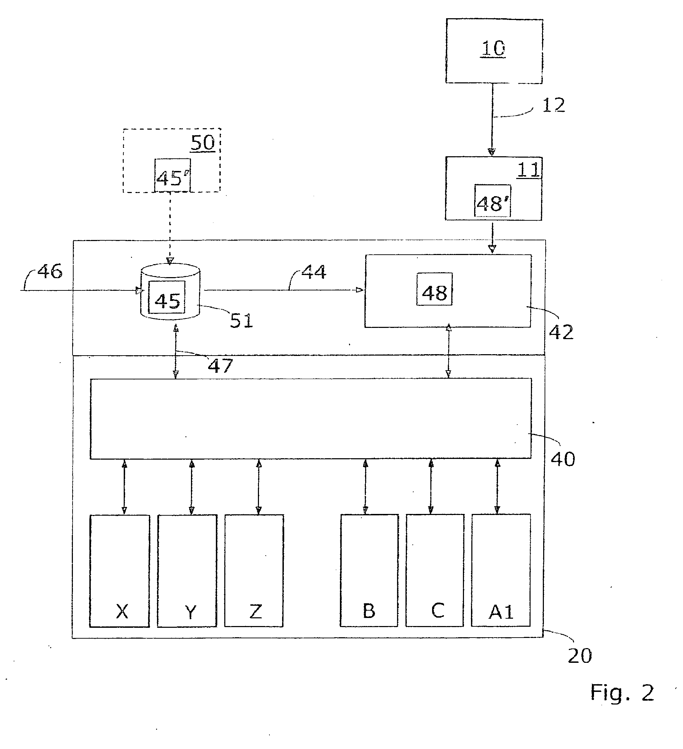

Wie bereits im Zusammenhang mit Fig. 1 erwähnt, ist eine Ausführungsform bevorzugt bei der die CNC-Steuerung 40 ein spezielles Softwaremodul (zum Beispiel Softwaremodul 11) umfasst, das es ermöglicht Daten von einer Messmaschine 10 zu übernehmen, wie in Fig. 2 anhand eines Pfeils 12 schematisch angedeutet. Daraus ermittelt das Softwaremodul 11 geänderte Steuerungsdaten 48' für die Serienproduktion.

Alternativ erhält oder lädt die Steuerung 40 geänderte Steuerungsdaten 45' von einer Messmaschine oder einem mit einer Messmaschine verbundenen Rechner (z.B. ein Rechner 50, wie in Fig. 2 angedeutet). Diese geänderte Steuerungsdaten 45' können die Steuerungsdaten 45 im Speicher 51 überschreiben. Diese Alternative ist in Fig. 2 durch gestrichelte Linien angedeutet. In diesem Fall werden die geänderten Steuerungsdaten 45' für die Serienproduktion verwendet.

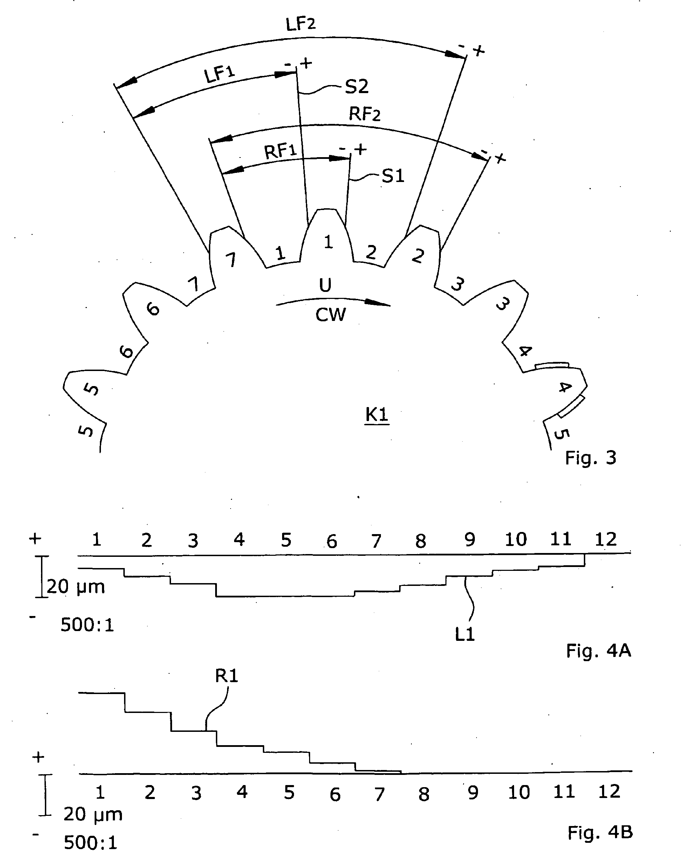

In Fig. 3 ist eine schematische Darstellung eines Abschnitts eines Kegelradritzels K1 im Stirnschnitt gezeigt. Anhand dieser Abbildung wird die erfindungsgemässe Ermittlung der Teilungsfehler erläutert. Gemäss DIN Norm geht man vom letzten Zahn Nummer 7 aus. Alle Teilungsfehler werden in Bezug zu diesem Zahn 7 (Bezugszahn) vermessen. Der Teilungswinkel von der rechten (konkaven) Seite des Zahns 7 bis zur rechten (konkaven) Seite des Zahns 1 wird mit RF₁ und der Teilungswinkel von der linken (konvexen) Seite des Zahns 7 bis zur linken (konvexen) Seite des Zahns 1 wird mit LF₁ bezeichnet. Analog werden die Teilungswinkel der anderen Zähne stets mit Bezug auf dem 7. Zahn vermessen. Die Linien S1 und S2 stellen jeweils den Ideal- oder Sollfall dar wo es keine Abweichung gibt. Durch die "-" und "+" Zeichen werden die Winkelabweichungen nach oben oder unten angedeutet. Der Pfeil U gibt die Drehrichtung an.

FIG. 4A zeigt eine schematische Darstellung des kumulierten Zahn-zu-Zahn Teilungsfehlers an den linken (konvexen) Zahnflanken. In diesem Beispiel handelt es sich um ein Kegelradritzel mit einer Zähnezahl z=12. Die Zähne sind in Fig. 4A nummeriert. Der 12. und letzte Zahn ist wiederum der Bezugszahn. Die kumulierte Teilungsabweichung wird durch den Liniezug L1 angedeutet. Alle Zähne 1 bis 11 haben einen Teilungsfehler auf der linken Zahnflanke.

FIG. 4B zeigt eine schematische Darstellung des kumulierten Zahn-zu-Zahn Teilungsfehlers an den rechten (konkaven) Zahnflanken des gleichen Kegelradritzels wie in Fig. 4A. Die Zähne sind auch in Fig. 4B nummeriert. Die kumulierte Teilungsabweichung wird durch den Liniezug R1 angedeutet. Alle Zähne 1 bis 7 haben im gezeigten Beispiel einen Teilungsfehler auf der rechten Zahnflanke.

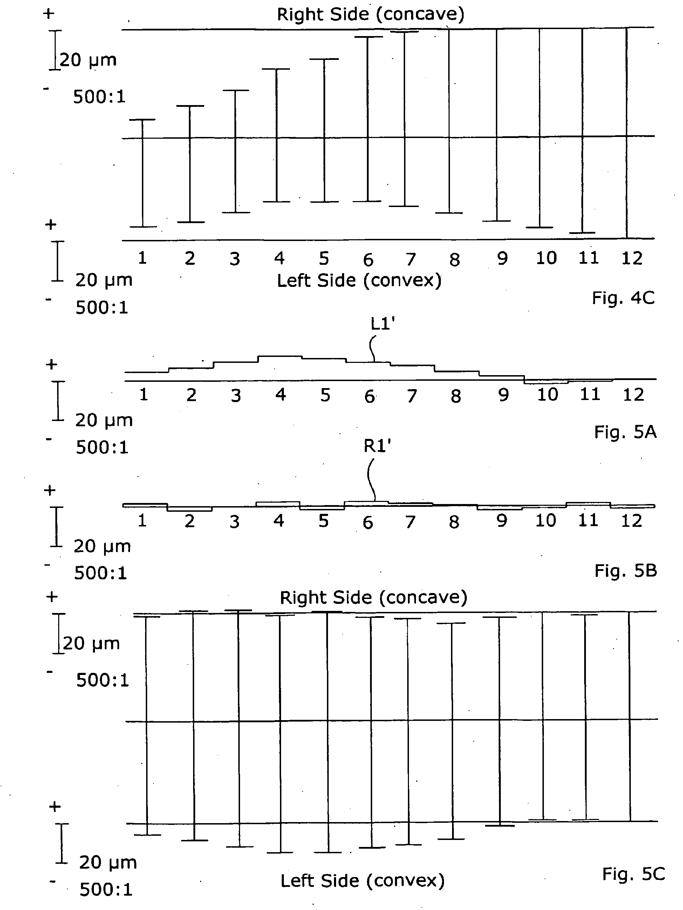

FIG. 4C zeigt eine schematische Darstellung des akkumulierten Teilungsfehlers der Zahnlücken des Kegelradritzels nach Fig. 4A und Fig. 4B. Die Weite der Zahnlücken ist durch Länge der doppel-T-förmigen Striche dargestellt und die Lage der Zahnlücken wird durch die Verschiebung der doppel-T-förmigen Striche nach oben und unten angedeutet. Per definitionem hat die 12. Lücke die richtige Lückenweite und Position. Alle anderen Zahnlücken zeigen Abweichungen.

Wenn man davon ausgeht, dass es sich bei den in den Figuren 4A bis 4C dargestellten Abbildungen um eine Wiedergabe eines Probewerkstücks handelt, dann sehen die anschliessend in Serie gefertigten Kegelradritzel so aus wie in den Figuren 5A bis 5C gezeigt. Bevor diese Serienfertigung anläuft, wurde der Teilungsfehler wie eingangs beschrieben korrigiert.

FIG. 5A zeigt eine schematische Darstellung des kumulierten Zahn-zu-Zahn Teilungsfehlers an den linken (konvexen) Zahnflanken eines in Serie gefertigten Kegelradritzels. Die kumulierte Teilungsabweichung wird durch den Liniezug L1' angedeutet. Nur noch die Zähne 1 bis 8 haben sichtbare Teilungsfehler auf der linken Zahnflanke.

FIG. 5B zeigt eine schematische Darstellung des kumulierten Zahn-zu-Zahn Teilungsfehlers an den rechten (konkaven) Zahnflanken des in Serie gefertigten Kegelradritzels. Die kumulierte Teilungsabweichung wird durch den Liniezug R1' angedeutet. Die Teilungsabweichung aller Zähne ist jetzt auf dieser Flanke sehr klein.

FIG. 5C zeigt eine schematische Darstellung des akkumulierten Teilungsfehlers der Zahnlücken des in Serie gefertigten Kegelradritzels. Alle anderen Zahnlücken zeigen nur noch geringe Abweichungen in der Position. Die Lückenweiten sind nahezu ideal.

Die Erfindung kann selbstverständlich auch für die Fertigung einzelner Kegelräder eingesetzt werden.

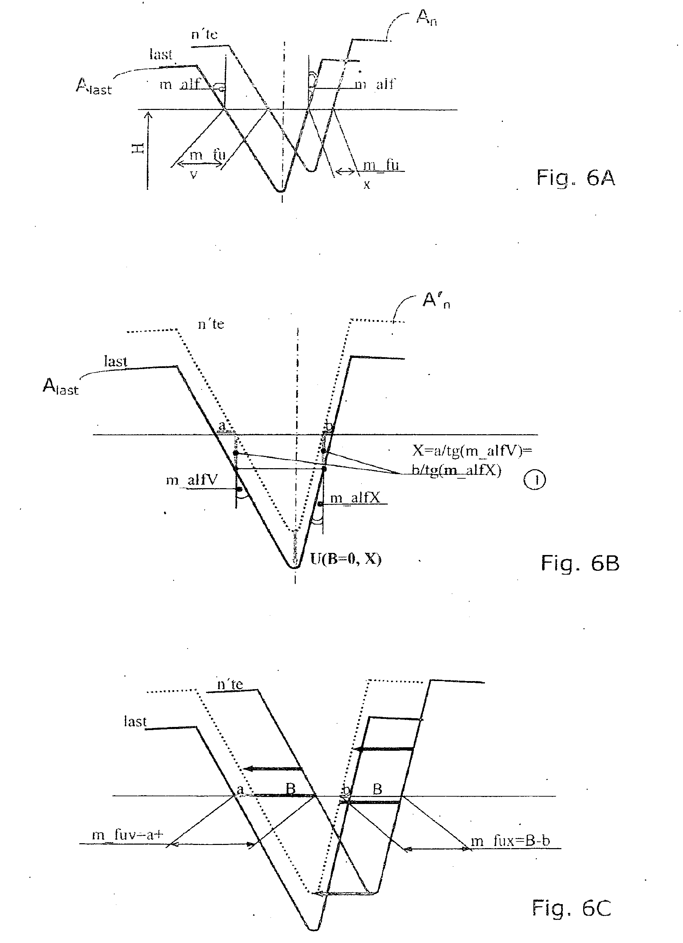

In den Figuren 6A bis 6C ist der mathematische Ansatz gezeigt, der in einer gegenwärtig bevorzugten Ausführungsform der Erfindung zur Ermittlung der Teilungsfehler eingesetzt wird. Man geht dabei von den Zahnlücken aus. Der gleiche Ansatz kann aber auch mit den Zähen durchgeführt werden. In Fig. 6A ist die Zahnlücke links vom Bezugszahn durch die Linie Aₗₐₛₜ und die die Zahnlücke links von einem anderen Zahn (den n-ten Zahn) durch die Linie Aₙ gekennzeichnet. Man kann erkennen, dass die n-te Zahnlücke zu weit oben sitzt und eine etwas geringer Lückenweite aufweist. In Fig. 6B ist ein Zwischenschritt des Verfahrens gezeigt. Die Zahnlücke Aₙ wurde nach links verschoben und ist nun mit A'ₙ bezeichnet, da es sich um eine kompensierte oder korrigierte Zahnlücke handelt. Die Verschiebung erfolgt so, dass die Mittellinien der beiden Zahnlücken zur Deckung gelangen. In dieser Momentaufnahme kann die Korrektur der Eintauchtiefe U(B=0,X) in radialer Richtung ermittelt werden. Auch der radial Abstand X der Flanken gegeneinander kann ermittelt werden.

Durch die Linie Aₗₐₛₜ ist die letzte Lücke dargestellt und entspricht der Sollposition der n-ten Lücke, die durch die Linie Aₙ angedeutet ist. fu bezeichnet jeweils die Abweichung der beiden Flanken. Der Wert der Abweichung entspricht den in Meßprotokoll in Fig. 4A und 4B dargestellten Abweichungen.

Über eine Tiefenänderung X (Eintauchbewegung) und Werkstückverdrehung B (Teilungsbewegung) wird die n-te Lücke so verschoben daß die Abweichung fu (in den Figuren 6A und 6B) Null werden. Das geschieht mit jeder Lücke.

Wie beschrieben erfolgt das Ermitteln des Teilungsfehlers in einem Verzahnungsmesszentrum 10, das mit der Vorrichtung 20 mindestens temporär verknüpft ist und eine Art closed-loop bilden kann. Das Ermitteln des Teilungsfehlers erfolgt individuell für alle Zähne des Probe-Werkstücks und der Tellungsfehler wird dadurch also gegenüber den Neutraldaten oder Masterdaten gemessen.

Die erfindungsgemässe Ermittelung der geeigneten Teilungsfehlerkompensation basierend auf Summenteilungsfehler pro Zahn für beide Flanken (konkav und konvex) ist immer bezogen auf den letzten Zahn, wie beschrieben. Dort wird Abweichung auf Null gesetzt. Die Maschinen- oder Steuerungsdaten werden im closed-loop angepasst. Zu diesem Zweck werden Korrekturwerte (Offset) oder Korrekturfaktoren online zur Vorrichtung 20 übergeben und dort werden diese auf die Maschinen- oder Steuerungsdaten aufgerechnet/angewandt. Dass heisst, das Verzahnungsmesszentrum 10 übergibt nur die Korrekturwerte (Offset) oder Korrekturfaktoren.

Gemäss Erfindung ist das Messzentrum 10 so ausgelegt, dass es einerseits das neuartige Verfahren zur Ermittlung des Teilungsfehlers durchführen und dann die Korrekturwerte (Offset) oder Korrekturfaktoren ermittelten kann. Weiterhin muss das Messzentrum 10 so ausgelegt sein, dass es diese Korrekturwerte (Offset) oder Korrekturfaktoren in einer geeigneten Form über ein Schnittstelle oder Verbindung 12 an die Vorrichtung 20 übergeben kann.

Vorzugsweise werden nicht die Zähne geändert sondern die Position der Lücken und deren Tiefe. Dies geschieht vorzugsweise durch das rechnerische Übereinanderlegen von Dreiecken, wie in den Figuren 6A bis 6C gezeigt. Die Teilungsfehler-Kompensation erfolgt pro Zahnlücke, damit jede einzelne Zahnlücke so aussieht und positioniert ist wie es in bezug auf die letzte Zahnlücke erforderlich ist.

Bei einer bevorzugten Ausführungsform kann eine Toleranz vorgegeben werden und es werden dann nur diejenigen Zähne oder Zahnlücken individuell korrigiert, die ausserhalb der Toleranz liegen.

## Patentansprüche

1. Verfahren zum Herstellen von teilungsfehler-kompensierten Kegelrädern (31) mittels einer Vorrichtung (20), die eine Werkstückspindel (42) zur Aufnahme des Kegelrades (31), eine Werkzeugspindel (42) zur Aufnahme eines Werkzeugs (24) und mehrere Antriebe (X, Y, Z, B, C, A1) zum Bearbeiten des Kegelrades (31) mit dem Werkzeug (24) im Einzelteilungs-Completing-Verfahren umfasst, mit den folgenden Schritten
- Vorgeben von Masterdaten oder Neutraldaten, welche die Form eines in Serie zu fertigenden Kegelrads (31) und die erforderliche Maschinenkinematik beschreiben,
- Ausführen von folgenden Bearbeitungsschritten anhand der Masterdaten oder Neutraldaten,
a) Bearbeiten einer Zahnlücke eines Probe-Werkstücks mit dem Werkzeug (24) durch Ausführen einer Bearbeitungsbewegung,
b) Ausführen einer Relativbewegung zwischen dem Werkzeug (24) und Probe-Werkstück, um das Werkzeug (24) aus der Zahnlücke zu entfernen,
c) Ausführen einer Teilungsdrehung, um das Probe-Werkstück in eine andere Winkelposition zu überführen,
d) Bearbeiten einer weiteren Zahnlücke des Probe-Werkstücks mit dem Werkzeug (24) durch erneutes Ausführen der Schritte a) - c), wobei diese Schritte wiederholt werden bis alle Zahnlücken des Probe-Werkstücks gefertigt sind,
- Übergabe des Probe-Werkstücks an ein Messsystem (10),
- Ermitteln des Teilungsfehlers aller Zähne des Probe-Werkstücks,
- Ermitteln von Korrekturwerten oder Korrekturfaktoren pro Zahn oder Zahnlücke, wobei ein Zahn oder eine Zahnlücke des Probe-Werkstücks als Bezug dient,
- Übergeben oder Übernahme der Korrekturwerte oder Korrekturfaktoren,
- Anpassen der Masterdaten oder Neutraldaten der Vorrichtung (20) anhand der Korrekturwerte oder Korrekturfaktoren als Vorbereitung auf die Fertigung mindestens eines teilungsfehler-kompensierten Kegelrades (31),
- Herstellen mindestens eines teilungsfehler-kompensierten Kegelrades unter Verwendung der angepassten Masterdaten oder Neutraldaten durch Ausführen der Schritte a) - d), wobei diese Schritte wiederholt werden bis alle Zahnlücken des teilungsfehler-kompensierten Kegelrades (31) gefertigt sind.

2. Das Verfahren nach Anspruch 1, **dadurch gekennzeichnet, dass** jeder Zahn oder jede Zahnlücke eine individuelle Korrektur erfährt.

3. Das Verfahren nach Anspruch 1 , **dadurch gekennzeichnet, dass** eine Toleranz vorgegeben ist und nur diejenigen Zähne oder Zahnlücken eine individuelle Korrektur erfahren, die ausserhalb der Toleranz liegen.

4. Das Verfahren nach einem der Ansprüche 1 bis 3, **dadurch gekennzeichnet, dass** es sich um ein Kegelradfräseverfahren, vorzugsweise ein Trockenfräsverfahren, handelt.

5. Das Verfahren nach einem der Ansprüche 1 bis 3, **dadurch gekennzeichnet, dass** es sich um ein Schleifverfahren, vorzugsweise ein Verfahren unter Verwendung einer abrichtbaren Schleifscheibe, handelt.

## Claims

1. Method for producing indexing-error-compensated bevel gears (31), using a device (20), which comprises a workpiece spindle (42) for receiving the bevel gear (31), a tool spindle (42) for receiving a tool (24), and multiple drives (X, Y, Z, B, C, A1) for machining the bevel gear (31) using the tool (24) in the single indexing completing method, having the following steps
- predefining master data or neutral data, which describe the shape of a bevel gear (31) to be manufactured in series and the required machine kinematics,
- executing the following machining steps on the basis of the master data or neutral data,
a) machining one tooth gap of a sample workpiece using the tool (24) by executing a machining movement,
b) executing a relative movement between the tool (24) and sample workpiece, in order to remove the tool (24) from the tooth gap,
c) executing an indexing rotation in order to transfer the sample workpiece into another angular position,
d) machining a further tooth gap of the sample workpiece using the tool (24) by repeated execution of steps a) - c), these steps being repeated until all tooth gaps of the sample workpiece are manufactured,
- transferring the sample workpiece to a measuring system (10),
- ascertaining the indexing error of all teeth of the sample workpiece,
- ascertaining correction values or correction factors per tooth or tooth gap, one tooth or one tooth gap of the sample workpiece being used as the reference,
- transferring or taking over the correction values or correction factors,
- adapting the master data or neutral data of the device (20) on the basis of the correction values or correction factors as a preparation for the manufacturing of at least one indexing-error-compensated bevel gear (31),
- producing at least one indexing-error-compensated bevel gear employing the adapted master data or neutral data by executing steps a) - d), these steps being repeated until all tooth gaps of the indexing-error-compensated bevel gear (31) are manufactured.

2. The method according to claim 1, **characterized in that** each tooth or each tooth gap experiences an individual correction.

3. The method according to claim 1, **characterized in that** a tolerance is predetermined and only the teeth or tooth gaps which lie outside the tolerance experience an individual correction.

4. The method according to one of claims 1 through 3, **characterized in that** it is a bevel gear milling method, preferably a dry milling method.

5. The method according to one of claims 1 through 3, **characterized in that** it is a grinding method, preferably a method employing a dressable grinding disk.

## Revendications

1. Procédé de fabrication de roues coniques (31) avec compensation des erreurs de division au moyen d'un dispositif (20), qui comprend une broche porte-pièce (42) destinée à recevoir la roue conique (31), une broche porte-outil (42) destinée à recevoir un outil (24) et plusieurs entraînements (X, Y, Z, B, C, A1) pour usiner la roue conique (31) avec l'outil (24) dans un procédé permettant de parfaire les divisions individuelles, comportant les étapes suivantes :
- prédéfinition de données maître ou de données neutres qui décrivent la forme d'une roue conique (31) à fabriquer en série et la cinématique de machine nécessaire,
- exécution des étapes d'usinage suivantes au moyen des données maître ou des données neutres,
a) usinage d'un entredent d'une pièce d'essai avec l'outil (24) par exécution d'un déplacement d'usinage,
b) exécution d'un déplacement relatif entre l'outil (24) et la pièce d'essai pour retirer l'outil (24) de l'entredent,
c) exécution d'une rotation de pas pour amener la pièce d'essai dans une autre position angulaire,
d) usinage d'un autre entredent de la pièce d'essai avec l'outil (24) par nouvelle exécution des étapes a) - c), ces étapes étant répétées jusqu'à ce que tous les entredents de la pièce d'essai soient terminés,
- transfert de la pièce d'essai vers un système de mesure (10),
- détermination de l'erreur de division de toutes les dents de la pièce d'essai,
- détermination des valeurs de correction ou des facteurs de correction par dent ou entredent, une dent ou un entredent de la pièce d'essai servant de référence,
- transfert ou reprise des valeurs de correction ou des facteurs de correction,
- adaptation des données maître ou des données neutres du dispositif (20) au moyen des valeurs de correction ou des facteurs de correction en tant que préparation de la fabrication d'au moins une roue conique (31) avec compensation des erreurs de division,
- fabrication d'au moins une roue conique avec compensation des erreurs de division en utilisant les données maître ou les données neutres adaptées par exécution des étapes a) - d), ces étapes étant répétées jusqu'à ce que tous les entredents de la roue conique (31) avec compensation des erreurs de division soient réalisés.

2. Procédé selon la revendication 1, **caractérisé en ce que** chaque dent ou chaque entredent subit une correction individuelle.

3. Procédé selon la revendication 1, **caractérisé en ce qu'**une tolérance est prédéfinie et que seuls les dents ou les entredents qui se trouvent en-dehors de la tolérance subissent une correction individuelle.

4. Procédé selon l'une des revendications 1 à 3, **caractérisé en ce qu'**il s'agit d'un procédé de fraisage de roues coniques, de préférence d'un procédé de fraisage à sec.

5. Procédé selon l'une des revendications 1 à 3, **caractérisé en ce qu'**il s'agit d'un procédé de rectification, de préférence un procédé utilisant une meule dressable.
